# EUROPEAN PATENT APPLICATION

(11) **EP 3 153 733 A1**
(43) Date of publication of application: **12.04.2017**
(21) Application number: 15306572.7
(22) Date of filing: 06.10.2015
(51) Int. Cl.: F16D 23/14

(54) **CLUTCH BEARING DEVICE WITH REAR PLATE**

(71) Applicant: Aktiebolaget SKF, 415 50 Göteborg (SE)
(72) Inventor: ARNAULT, Benoit, 37540 SAINT CYR SUR LOIRE (FR); GAULTIER, Stéphane, 37360 SONZAY (FR)
(74) Representative: Tweedlie, Diane Harkness

(57) **Abstract**

The clutch bearing device comprises a bearing 10 provided with an inner ring 16 and with an outer ring 18, and an operating element 14 mounted into a bore of the bearing and secured to one of the rings.

The operating element 14 is provided with a rear plate 26 comprising a flange 26a and at least one centring lug 26c extending axially from said flange on the side opposite to the bearing. The rear plate 26 further comprises at least one stiffener disposed between the flange 26a and the centring lug 26c.

## Description

The present invention relates to the field of clutch release bearing devices intended to act on the diaphragm of a clutch, in particular for a motor vehicle.

Such a clutch release bearing device generally comprises a rolling bearing comprising a rotating ring and a non-rotating ring, the rotating ring being provided with a bearing surface coming into permanent contact with a clutch member, and in particular with the diaphragm of the clutch.

The device also comprises an operating element which supports the rolling bearing and which can slide axially with respect to a guide tube under the action of a clutch-release fork having end fingers capable of coming into contact with a rear plate of said operating element. The device further comprises a spring to retain the fingers of the clutch-release fork. The rear plate of the operating element is provided with two ears or lugs each having a slot in order to receive an end of the spring. For more details, it is possible for example to refer to the patent application FR-A1-2 995 375 (SKF).

By virtue of the radial contacts between the fingers of the clutch-release fork and the lugs of the rear plate, the phenomena of deformation occur at said lugs. Such deformations can also lead to breakage of the lugs.

One aim of the present invention is to overcome these drawbacks.

It is a particular object of the present invention to provide a clutch release bearing device having a good reliability.

In one embodiment, the clutch bearing device comprises a bearing provided with an inner ring and with an outer ring, and an operating element mounted into a bore of the bearing and secured to one of the rings. The operating element is provided with a rear plate comprising a flange and at least one centring lug extending axially from said flange on the side opposite to the bearing. The rear plate further comprises at least one stiffener disposed between the flange and the centring lug.

The use of at least one stiffener makes it possible to increase the radial stiffness of the centring lug. With the stiffener acting as reinforcing means provided between the flange and the centring lug, the radial deformations of said lug under the action of the clutch-release fork are limited. Besides, since the centring lug is less subject to radial deformations, it is possible to foresee a lug having an increased length in order to have a larger surface contact with the fingers of the clutch-release fork.

Preferably, said stiffener extends at least along a part of the junction between the flange and the centring lug. Said stiffener may further extend both on the flange of the rear plate and on the centring lug. Accordingly, the radial stiffness of the centring lug is further increased.

In one embodiment, said stiffener extends to a free edge of the centring lug.

In one embodiment, the rear plate and said stiffener are made in one part. Advantageously, said stiffener is made by local plastic deformation of the rear plate.

In one embodiment, the rear plate further comprises abutment means provided at one lateral end of the centring lug and which protrude with respect to an abutment surface of the flange of said plate. These means are adapted to block the displacement of the clutch-release fork along the lug. Besides, the abutment means also act as additional reinforcing means to further increase the radial stiffness of the lug. Preferably, the rear plate and said abutment means are made in one part.

In another embodiment, the rear plate may be deprived of such abutment means.

In one embodiment, the rear plate is made of stamped metal sheet. Alternatively, the rear plate may be made from synthetic material.

Preferably, the rear plate comprises two centring lugs facing each other, at least one stiffener being provided between the flange and each of said lugs.

In one embodiment, the operating element further comprises a spring secured to rear plate, one end of said spring being located inside a slot formed on the centring lug. The operating element may further comprise a casing radially surrounding the bearing. The spring may be secured to the casing.

The operating element may further comprises a sleeve mounted into the bore of the bearing, the rear plate being connected to the sleeve. In one embodiment, the sleeve is overmouled onto the rear plate.

The present invention and its advantages will be better understood by studying the detailed description of specific embodiments given by way of non-limiting examples and illustrated by the appended drawings on which:
- Figure 1 is a cross-section of a clutch release bearing device according to an example of the invention,
- Figure 2 is a perspective view of the device of Figure 1,
- Figures 3 and 4 are perspective views of a rear plate of the device of Figure 1, and
- Figures 5 and 6 are perspective views of a rear plate according to another examples of the invention.

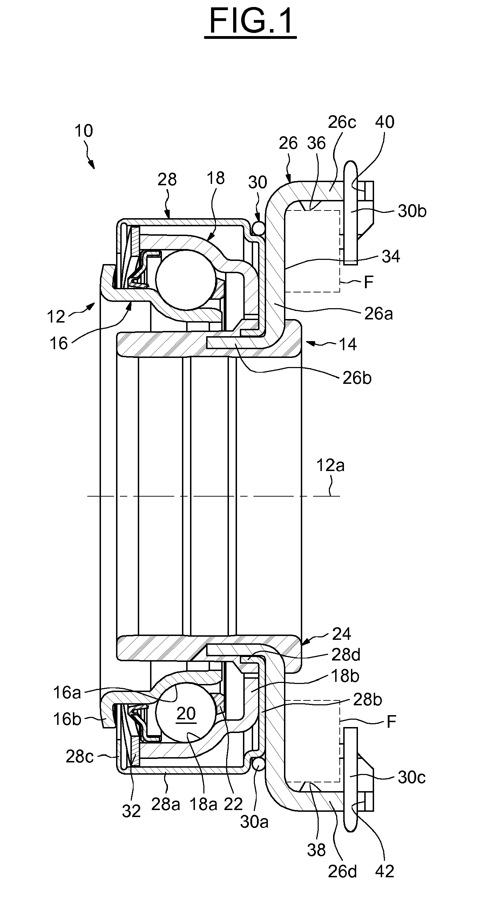

As shown on Figure 1, a clutch release bearing device 10 comprises a rolling bearing 12 and an operating element 14 supporting said rolling bearing and intended to be moved axially with respect to a guide tube (not shown).

The rolling bearing 12, of axis 12a, comprises a rotating inner ring 16, a non-rotating outer ring 18, a row of rolling elements 20, which are provided here in the form of balls and are mounted between said rings, and a cage 22 for maintaining the regular circumferential spacing of the rolling elements.

The inner and outer rings 16, 18 may advantageously be made of stamped metal sheet. The inner ring 16 delimits a toroidal track or raceway 16a for the rolling elements 20 oriented radially outwards. The inner ring 16 comprises a radial portion 16b provided to come axially into contact with a diaphragm of the clutch (not shown). The outer ring 18 delimits a toroidal track or raceway 18a for the rolling elements 20 oriented radially inwards. The outer ring 18 comprises a radial portion 18b in axial contact with the operating element 14.

The operating element 14 comprises a guide sleeve 24 mounted into the bore of the rolling bearing 12 and a rear plate 26 secured to the sleeve. As will be described later, the rear plate 26 is designed to limit the phenomena of deformation which occur with the radial contacts between two fingers F of a clutch-release fork (illustrated in dashed lines) and said plate.

The guide sleeve 24 is advantageously made from synthetic material. The sleeve 24 has an annular form. In the disclosed example, the guide sleeve 24 is overmoulded on the rear plate 26. Alternatively, the rear plate 26 may be secured to the guide sleeve 24 by any other appropriate means.

The operating element 14 also comprises an annular casing 28 to axially retain the rolling bearing 10 and a spring 30 to retain the fingers F of the clutch-release fork. The casing 28 radially surrounds the outer ring 18 of the rolling bearing. The casing 28 may advantageously be made of stamped metal sheet. The casing 28 comprises an outer axial portion 28a radially surrounding the rolling bearing 10 and two lateral radial portions 28b and 28c, each radial portion extending radially inwards one end of the outer axial portion 28a. The radial portion 28b is in axial contact against the rolling bearing 10 on one side and in axial contact with the rear plate 26 on the other side. The radial portion 28b axially bears against the outer ring 18. The casing 28 also comprises an inner axial portion 28d extending the radial portion 28b. In the disclosed example, the guide sleeve 24 is overmoulded onto the radial portion 28b. A corrugated washer 32 is axially interposed between the outer ring 18 and the radial portion 28c of the casing.

The spring 30 is provided with a body 30a radially interposed between the casing 28 and the rear plate 26 and maintained therebetween, and with two first and second opposite ends 30b, 30c to axially retain the fingers F of the clutch-release fork.

In the disclosed example, the rear plate 26 comprises an annular radial base or flange 26a and an annular inner axial portion 26b extending from said flange axially on the side of the rolling bearing. The axial portion 26b extends a small-diameter edge of the flange 26a. In the disclosed example, the guide sleeve 24 is overmoulded on the axial portion 26b of the rear plate. The rear plate 26 may advantageously be made of stamped metal sheet.

The flange 26a delimits a rear abutment surface 34 for the fingers F of the clutch-release fork which is oriented axially on the side opposite to the rolling bearing 10. The abutment surface 34 is oriented axially outwards. The abutment surface 34 extends radially. The fingers F axially come into contact against the abutment surface 34. Axially on the side opposite to the abutment surface 34, the flange 26a axially bears against the casing 28. In the disclosed example, the flange 26a extends radially outwards beyond the casing 28.

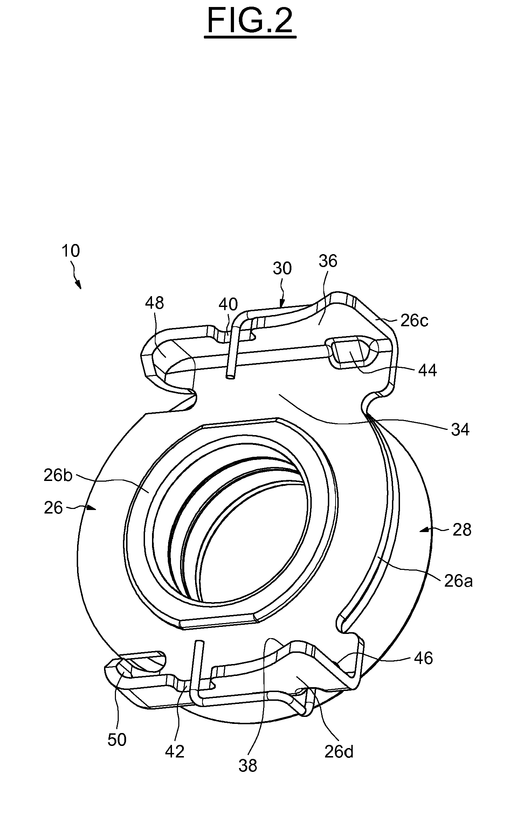

As shown more clearly on Figure 2, the rear plate 26 also comprises two centring lugs 26c, 26d extending axially from the flange 26a on the side opposite to the rolling bearing. The lugs 26c, 26 enable to obtain a radial centring of the clutch-release fork with respect to the rear plate 26. The lugs 26c, 26d radially face each other. The lugs 26c, 26d extend from a large-diameter edge of the flange 26a. In the disclosed example, the lugs 26c, 26d are identical one to another.

Each lug 26c, 26d delimits a bearing surface 36, 38 for one of the fingers of the clutch-release fork which is oriented radially inwards. The length of each lug 26c, 26d is delimited by the two lateral ends (not referenced). A slot 40, 42 is formed on the free edge of each lug 26c, 26d which is axially opposite to the junction between the flange 26a and said lug. Each end 30b, 30c of the spring is engaged into one of the slots 40, 42 and radially protrudes inwards with respect to the bearing surface 36, 38 of the associated lug.

Referring once again to Figure 1, each finger F of the clutch-release fork is axially located between the flange 26a of the rear plate and one of the ends 30b, 30c of the spring. The bearing surfaces 36, 38 of the lugs limit the radial displacements of the clutch-release fork.

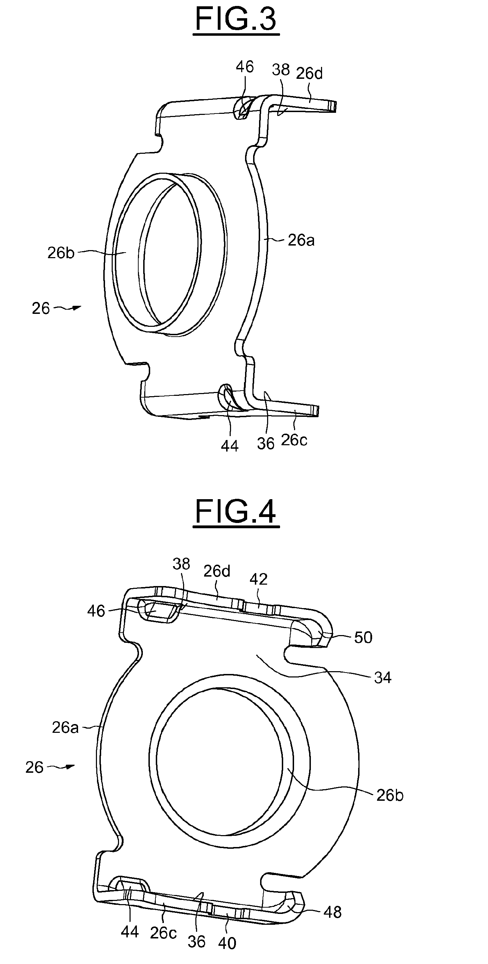

As above-mentioned, the rear plate 26 is designed to limit the radial deformations of the lugs 26c, 26d caused by the contacts with the fingers F of the clutch-release fork. As shown on Figures 2 to 4, the rear plate 26 comprises a stiffener 44, 46 provided between the flange 26a and each lug 26c, 26d. Each stiffener 44, 46 extends along a part of the junction between the flange 26a and the associated lug 26c, 26d. In the disclosed example, this junction has a curved shape. Each stiffener 44, 46 also extends on the associated lug 26c, 26 and on the flange 26a.

Each stiffener 44, 46 forms locally a protrusion extending between the flange 26a and the associated lug 26c, 26d and connected to said flange and lug. Preferably, each stiffener 44, 46 is located in the contact zone between the finger of the clutch-release fork and the corresponding lug. In this example, each stiffener 44, 46 protrudes with respect to the bearing surface 36, 38 of the associated lug 26c, 26d and the abutment surface 34 of the flange 26a. Each stiffener 44, 46 protrudes toward the inside of the rear plate 26.

In the disclosed example, each stiffener 44, 46 is made by local plastic deformation of the rear plate 26. Each deformation is achieved by upsetting some of the material of the rear plate 26 in order to cause the material to creep. The stiffeners 44, 46 are obtained by pushing. The stiffeners 44, 46 are made in one part with the rear plate 26.

The rear plate 26 also comprises an abutment protrusion 48, 50 provided at one of the lateral ends of each lug 26c, 26d and which protrudes with respect to the abutment surface 34 of the flange 26a. In this example, each protrusion 48, 50 extends from the associated lateral end of the lug 26c, 26d and is connected to the abutment surface 34. The protrusions 48, 50 radially face each other. Each protrusion 48, 50 forms an abutment means to block the radial displacement of the clutch-release fork along the lug 26c, 26d. Besides, the protrusions 48, 50 also act as stiffener means to further increase the radial stiffness of the lugs.

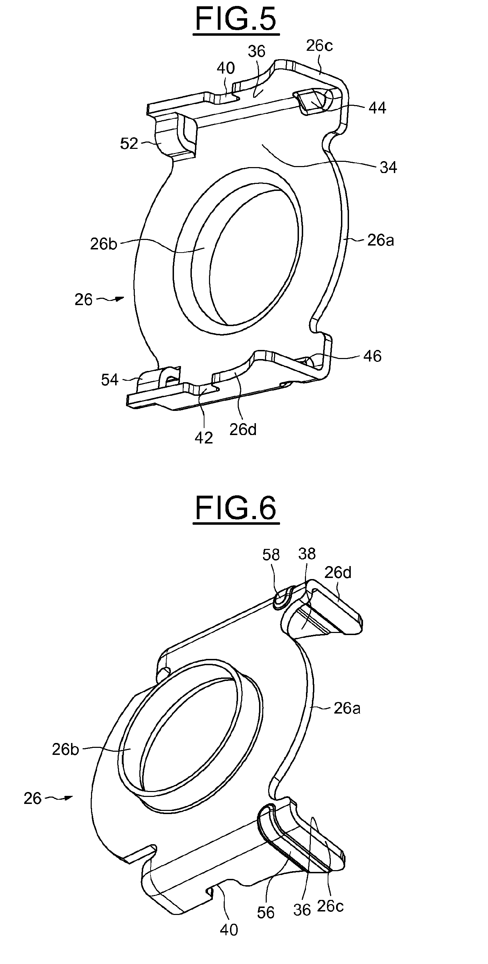

In the disclosed example, the protrusions 48, 50 are formed by folding or lancing of the rear plate 26. Alternatively, the rear plate 26 may comprise abutment protrusions 52, 54 formed by partial cutting and bending as shown in the example illustrated on Figure 5, in which identical parts are given identical references. Similarly to the first example, each protrusion 52, 54 is provided at one of the lateral ends of the associated lug 26c, 26d and protrudes with respect to the abutment surface 34 of the flange 26a. Each protrusion 52, 54 extends from the associated bearing surface 36, 38 of the lug 26c, 26d and is connected to the abutment surface 34. The protrusions 52, 54 radially face each other.

The example illustrated on Figure 6, in which identical parts are given identical references, differs from the first example in that the rear plate 26 comprises a stiffener 56, 58 for each lug 26c, 26d which protrudes toward the outside of the said plate. Similarly to the first example, each stiffener 56, 58 is provided between the flange 26a and the associated lug 26c, 26d. Each stiffener 56, 58 extends along a part of the junction between the flange 26a and the associated lug 26c, 26d. Each stiffener 56, 58 also extends on the flange 26a and on the associated lug 26c, 26 to its free edge. Each stiffener 56, 58 also forms locally a protrusion extending between the flange 26a and the associated lug 26c, 26d and connected to said flange and lug. The stiffener 56, 58 are made by local plastic deformations of the rear plate 26.

In the illustrated examples, one stiffener is provided between each centring lug and the flange. Alternatively, it could be possible to foresee at least two stiffeners for each lug. In the disclosed examples, the rear plate and the stiffeners are made in one part. In a variant, each stiffener may be a separate and distinct part from the rear plate which is secured to said plate by any appropriate means.

The invention has been illustrated on the basis of a clutch bearing device comprising a rolling bearing provided with at least one row of rolling elements radially disposed between the inner and outer rings. Alternatively, the bearing may be a plain bearing or a sliding bearing.

## Claims

1. Clutch bearing device comprising a bearing (10) provided with an inner ring (16) and with an outer ring (18), and an operating element (14) mounted into a bore of the bearing and secured to one of the rings, said operating element being provided with a rear plate (26) comprising a flange (26a) and at least one centring lug (26c) extending axially from said flange on the side opposite to the bearing, **characterized in that** the rear plate (26) further comprises at least one stiffener (44; 56) disposed between the flange (26a) and the centring lug (26c).

2. Device according to claim 1, wherein said stiffener (44; 56) extends at least along a part of the junction between the flange (26a) and the centring lug (26c).

3. Device according to claim 2, wherein said stiffener (44; 56) further extends both on the flange (26a) of the rear plate and on the centring lug.

4. Device according to claim 3, wherein said stiffener (56) extends to a free edge of the centring lug.

5. Device according to any of the preceding claims, wherein the rear plate (26) and said stiffener (44; 56) are made in one part.

6. Device according to any of the preceding claims, wherein said stiffener (44; 56) is made by local plastic deformation of the rear plate.

7. Device according to any of the preceding claims, wherein the rear plate (26) further comprises abutment means (48; 52) provided at one lateral end of the centring lug and which protrude with respect to an abutment surface (34) of the flange (26a) of said plate.

8. Device according to claim 7, wherein the rear plate (26) and said abutment means (48; 52) are made in one part.

9. Device according to any of the preceding claims, wherein the rear plate (26) is made of stamped metal sheet.

10. Device according to any of the preceding claims, wherein the rear plate (26) comprises two centring lugs (26c, 26d) facing each other, at least one stiffener (44, 46; 56, 58) being provided between the flange (26a) and each of said lugs.

11. Device according to any of the preceding claims, wherein the operating element (14) further comprises a spring (30) secured to rear plate (26), one end (30b) of said spring being located inside a slot (40) formed on the centring lug.

12. Device according to any of the preceding claims, wherein the operating element (14) further comprises a casing (28) radially surrounding the bearing (10).

13. Device according to claim 12 dependent to claim 11, wherein the spring (30) is secured to the casing (28).

14. Device according to any of the preceding claims, wherein the operating element (14) further comprises a sleeve (24) mounted into the bore of the bearing, the rear plate (26) being connected to the sleeve.

15. Device according to claim 14, wherein the sleeve (24) is overmouled onto the rear plate (26).
